# EUROPEAN PATENT APPLICATION

(11) **EP 4 786 273 A1**
(43) Date of publication of application: **05.08.2026**
(21) Application number: 26154183.3
(22) Date of filing: 26.01.2026
(51) Int. Cl.: B60N 2/815, B60N 2/818, B60N 2/888

(54) **PASSENGER VEHICLE HEADREST SUPPORT STRUCTURE AND LOCK PLATE**

(30) Priority: 31.01.2025 JP 2025014663
(71) Applicant: Suzuki Motor Corporation, Hamamatsu-shi, Shizuoka 432-8611 (JP)
(72) Inventor: TANAKA, Toshiyuki, HAMAMATSU-SHI, 432-8611 (JP); IKEDA, Hiroyuki, HAMAMATSU-SHI, 432-8611 (JP)
(74) Representative: Plasseraud IP

(57) **Abstract**

[Object] Provided is a passenger vehicle headrest support structure and a lock plate that can prevent a stay from rotating about its axis and being unlocked.

[Means to Solve the Problems] In a vehicle headrest support structure 100 including a stay 110 configured to support a headrest and a lock mechanism 120 that is provided in a seat back and configured to lock the stay 110, a groove recessed in a horizontal direction is formed in a side surface of the stay 110, the lock mechanism 120 includes a plate-shaped lock plate 160 configured to engage with the groove, and a spring 170 configured to bring the lock plate 160 into engagement with the groove, and the lock plate 160 has a contact surface that is in areal contact with an abutting surface 112x on the bottom of the groove when the stay 110 is rotated about its axis.

## Description

### [Field of the Invention]

The present invention relates to a passenger vehicle headrest support structure and a lock plate.

### [Background of the Invention]

For example, Patent Document 1 discloses a headrest including: a bar with a flat zone at the tip of a projection; and a rod with a groove having a flat abutting surface on the bottom of the groove, in which the rod is locked when the projection of the bar is inserted into the groove of the rod and is unlocked when the projection of the bar leaves the groove of the rod.

### [Prior Art Documents]

### [Patent Documents]

[Patent Document 1] WO 2018/046841

### [Summary of the Invention]

### [Problems to be Solved by the Invention]

However, in the configuration described in Patent Document 1, a curved surface is formed adjacent to the flat zone at the tip of the projection of the bar, so when the rod rotates and the groove of the rod rotates, the groove of the rod (stay) and the curved surface of the projection of the bar (lock plate) come into linear contact. Therefore, the rotative force of the rod is concentrated on the linear contact area, and the rod is easily unlocked.

In view of the above-described problem, the present invention aims to provide a passenger vehicle headrest support structure and a lock plate that can prevent a stay from rotating about its axis and being unlocked.

### [Means to Solve the Problems]

In order to solve the above-described problem, a representative configuration of the present invention is directed to a passenger vehicle headrest support structure comprising: a stay configured to support a headrest; and a lock mechanism that is provided in a seat back and configured to lock the stay, characterized in that a groove recessed in a horizontal direction is formed in a side surface of the stay, the lock mechanism includes a plate-shaped lock plate configured to engage with the groove, and a lock member configured to bring the lock plate into engagement with the groove, and the lock plate has a contact surface that is in areal contact with an abutting surface on the bottom of the groove when the stay is rotated about its axis.

Another representative configuration of the present invention is directed to a passenger vehicle headrest support structure comprising: a stay configured to support a headrest; and a lock mechanism that is provided in a seat back and configured to lock the stay, characterized in that a groove recessed in a horizontal direction is formed in a side surface of the stay, the groove being recessed the most at the center of the groove, the lock mechanism includes a plate-shaped lock plate configured to engage with the groove, and a lock member configured to bring the lock plate into engagement with the groove, and the lock plate has a contact surface that is in areal contact with an entire abutting surface on the bottom of the groove.

Yet another representative configuration of the present invention is directed to a plate-shaped lock plate configured to engage with a groove recessed in a horizontal direction and formed in a side of a stay for supporting a headrest to lock the stay, characterized in that the lock plate has a most protruding portion that protrudes the most to the center of an abutting surface on the bottom of the groove.

Yet another representative configuration of the present invention is directed to a passenger vehicle headrest support structure comprising: a stay configured to support a headrest; and a lock mechanism that is provided in a seat back and configured to lock the stay, characterized in that a groove recessed in a horizontal direction is formed in a side surface of the stay, an abutting surface on the bottom of the groove is flat, the lock mechanism includes a plate-shaped lock plate configured to engage with the groove, and a lock member configured to bring the lock plate into engagement with the groove, and the lock plate has a facing portion that faces the abutting surface of the groove, the facing portion has a flat surface that protrudes the most to the center of the abutting surface of the groove, and an inclined surface that is gently inclined, is located on at least one of the sides of the most protruding flat surface when viewed in a plan view, and has a larger area than an area of the flat surface, and the inclined surface is arranged across a gap from the abutting surface on the bottom of the groove before the stay is rotated about its axis.

### [Effect of the Invention]

According to the present invention, it is possible to prevent a stay from rotating about its axis and being unlocked.

### [Brief Explanation of the Drawings]

FIG. 1 shows, in a side view and the like, a portion of a seat having a vehicle headrest support structure according to a first example of the present invention.
FIG. 2 shows, in a cross-sectional view and a plan view, a lock mechanism included in the vehicle headrest support structure of FIG. 1 from above.
FIG. 3 shows, in perspective views, a lock plate and a stay included in the vehicle headrest support structure of FIG. 1.
FIG. 4 shows, in a plan view, the lock plate and the stay included in the vehicle headrest support structure of FIG. 1.
FIG. 5 shows, in plan views, the lock plate and the stay included in the vehicle headrest support structure of FIG. 1.
FIG. 6 shows, in a plan view and the like, operations of the lock plate and the stay included in the vehicle headrest support structure of FIG. 1.
FIG. 7 shows, in plan views, the configuration and operations of a lock mechanism included in a vehicle headrest support structure according to a comparative example.
FIG. 8 shows, in plan views, a lock plate and a stay included in a vehicle headrest support structure according to a second example.
FIG. 9 shows, in plan views, lock plates and stays included in vehicle headrest support structures according to third and fourth examples.
FIG. 10 shows, in plan views, lock plates and stays included in vehicle headrest support structures according to fifth and sixth examples.
FIG. 11 is an enlarged view of a portion of FIG. 2.

### [Embodiments of the Invention]

One embodiment of the present invention is directed to a passenger vehicle headrest support structure comprising: a stay configured to support a headrest; and a lock mechanism that is provided in a seat back and configured to lock the stay, characterized in that a groove recessed in a horizontal direction is formed in a side surface of the stay, the lock mechanism includes a plate-shaped lock plate configured to engage with the groove, and a lock member configured to bring the lock plate into engagement with the groove, and the lock plate has a contact surface that is in areal contact with an abutting surface on the bottom of the groove when the stay is rotated about its axis.

According to the present invention, if the stay is rotated about its axis by external force applied to the headrest, the lock plate will come into areal contact with the abutting surface of the groove in the stay, so the lock plate is prevented from moving in the unlocking direction. Accordingly, it is possible to prevent the stay from rotating about its axis and being unlocked.

The contact surface of the lock plate may be arranged across a gap from the abutting surface on the bottom of the groove before the stay is rotated about its axis.

According to this configuration, the timing until the abutting surface on the bottom of the groove comes into contact with the contact surface of the lock plate while the stay is rotating about its axis can be delayed. As a result, even if external force is applied to the headrest, the lock plate can be prevented from moving in the direction of unlocking the lock with the groove.

The abutting surface of the groove may be flat, and the lock plate may have a most protruding portion that is adjacent to the contact surface and protrudes the most to the center of the abutting surface of the groove.

According to this configuration, the abutting surface of the groove of the stay can make a broad contact with a side of the most protruding portion of the lock plate when the stay is rotated about its axis.

The most protruding portion of the lock plate may be flat, and the contact surface of the lock plate may be an inclined surface that is gently inclined and located on at least one of the sides of the most protruding portion when viewed in a plan view.

According to this configuration, before the stay rotates about its axis, the lock plate is in areal contact with the abutting surface of the groove of the stay with the flat surface to lock the stay, and when the stay is rotating about its axis, the lock plate comes into areal contact with the abutting surface of the groove of the stay with the inclined surface, and can be prevented from moving in the unlocking direction.

Preferably, a portion of the abutting surface of the groove of the stay that comes into areal contact with the inclined surface may have a larger dimension or area when viewed in a plan view than a portion of the abutting surface that is in contact with the flat surface.

According to this configuration, the lock plate can catch the abutting surface of the groove of the stay that was inclined due to the axial rotation of the stay, over a wider area, thus stabilizing locking by the lock plate.

The center of the abutting surface of the groove may protrude the most toward the lock plate, and the lock plate may have a most recessed portion that is adjacent to the contact surface and recessed the most from the center of the abutting surface of the groove.

According to this configuration, the abutting surface of the groove of the stay is difficult to be removed from the most recessed portion of the lock plate.

The most recessed portion of the lock plate may be flat, and the contact surface of the lock plate may be an inclined surface that is gently inclined and located on at least one of the sides of the most recessed portion when viewed in a plan view.

According to this configuration, before the stay rotates about its axis, the lock plate is in areal contact with the abutting surface of the groove of the stay with the flat surface to lock the stay, and when the stay is rotating about its axis, the lock plate comes into areal contact with the abutting surface of the groove of the stay with the inclined surface, and can be prevented from moving in the unlocking direction.

The lock plate may further include at least one outer surface that is continuous with the inclined surface and extends toward the stay.

According to this configuration, when the stay is rotated about its axis, the stay comes into contact with the outer surface, which prevents axial shifting of the stay and prevents stress from being locally concentrated on the lock plate.

Another form of the present invention is directed to a passenger vehicle headrest support structure comprising: a stay configured to support a headrest; and a lock mechanism that is provided in a seat back and configured to lock the stay, characterized in that a groove recessed in a horizontal direction is formed in a side surface of the stay, the groove being recessed the most at the center of the groove, the lock mechanism includes a plate-shaped lock plate configured to engage with the groove, and a lock member configured to bring the lock plate into engagement with the groove, and the lock plate has a contact surface that is in areal contact with an entire abutting surface on the bottom of the groove.

According to this configuration, even before the stay is rotated about its axis by external force applied to the headrest, the lock plate comes into areal contact with the abutting surface of the groove in the stay, and is prevented from moving in the unlocking direction. Accordingly, it is possible to prevent the stay from rotating about its axis and being unlocked.

The abutting surface of the groove may be recessed in a manner such that it is curved when viewed in a plan view. According to this configuration, the areal contact portion on the lock plate side is also curved, so the lock plate can smoothly come into contact with the groove on the stay side.

The abutting surface of the groove may be gently inclined and recessed substantially in a V-shape when viewed in a plan view. According to this configuration, the tip of the areal contact portion on the lock plate side easily fits into the V-shaped abutting surface on the stay side of the groove, thereby increasing the reliability of the areal contact.

The lock plate may further have two outer surfaces that are continuous with the contact surface, and extend toward the stay.

According to this configuration, when the stay is rotated about its axis, the stay comes into contact with the outer surface, which prevents axial shifting of the stay and prevents stress from being locally concentrated on the lock plate.

Another form of the present invention is directed to a plate-shaped lock plate configured to engage with a groove recessed in a horizontal direction and formed in a side of a stay for supporting a headrest to lock the stay, characterized in that the lock plate has a most protruding portion that protrudes the most to the center of an abutting surface on the bottom of the groove.

According to this configuration, if a stay with a groove corresponding to the protruding shape of the lock plate is used, even before the stay is rotated about its axis by external force applied to the headrest, the lock plate will come into areal contact with the abutting surface of the groove in the stay and prevents further axial rotation of the stay. Accordingly, it is possible to prevent the stay from rotated about its axis and being unlocked.

Another embodiment of the present invention is directed to a passenger vehicle headrest support structure comprising: a stay configured to support a headrest; and a lock mechanism that is provided in a seat back and configured to lock the stay, characterized in that a groove recessed in a horizontal direction is formed in a side surface of the stay, an abutting surface of the groove is flat, the lock mechanism includes a plate-shaped lock plate configured to engage with the groove, and a lock member configured to bring the lock plate into engagement with the groove, and the lock plate has a facing portion that faces the abutting surface of the groove, the facing portion has a flat surface that protrudes the most to the center of the abutting surface of the groove, and an inclined surface that is gently inclined, is located on at least one of the sides of the most protruding flat surface when viewed in a plan view, and has a larger area than an area of the flat surface, and the inclined surface is arranged across a gap from the abutting surface on the bottom of the groove before the stay is rotated about its axis.

According to this configuration, the timing until the abutting surface on the bottom of the groove comes into contact with the inclined surface of the lock plate while the stay is rotating about its axis can be delayed. As a result, even if external force is applied to the headrest, the lock plate can be prevented from moving in the direction of unlocking the lock with the groove.

### [Examples]

The following will describe preferred examples of the present invention in detail with reference to the accompanying drawings. The dimensions, materials, and other specific numerical values shown in the examples are merely illustrative to facilitate understanding of the invention, and do not limit the present invention, unless otherwise specifically noted. Note that in the specification and the drawings, redundant descriptions of elements having substantially the same functions and configurations are omitted by adding the same reference signs, and illustration of elements that are not directly related to the present invention is also omitted.

### First Example

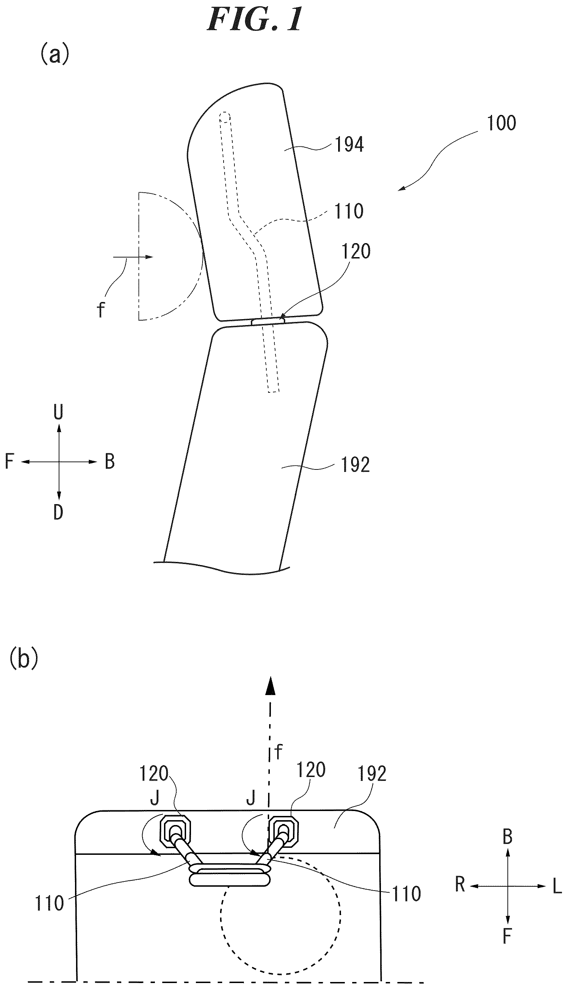

FIG. 1(a) is a side view showing a portion of a seat having a vehicle headrest support structure 100 according to a first example of the present invention. In FIG. 1(a) and all other drawings, the front and back directions of the vehicle are indicated by arrows F (Forward) and B (Backward), respectively. The left and right in a vehicle width direction are indicated by arrows L (Leftward) and R (Rightward), respectively. The up and down directions are indicated by arrows U (upward) and D (downward), respectively.

The vehicle headrest support structure 100 shown in FIG. 1(a) includes cylindrical stays 110 that extend in the up-down direction and supports a headrest 194 for supporting the head of a passenger of the vehicle from behind, and a lock mechanism 120 that is provided on a seat back 192 and locks the stay 110.

FIG. 1(b) is a plan view showing an overview of the stay 110 and the lock mechanism 120 in FIG. 1(a). As shown in FIG. 1(b), the stays 110 can rotate about their respective axis due to a rotative force J when the external force f is applied. This axial rotation includes both the rotation of the stays 110 without twisting, and the partial twisting of the stays 110 due to the deformation of the stay 110.

Note that the vehicle headrest support structure 100 has two stays 110 lined up in the vehicle width direction, and two lock mechanisms 120 lined up in the vehicle width direction. The stay 110 and lock mechanism 120 on the right side of the seat are such that the stay 110 is locked in the vehicle front-back direction, and the stay 110 and lock mechanism 120 on the left side of the seat are such that the stay 110 is locked in the vehicle width direction. Rotating one configuration 90° in a plan view can result in the other configuration, and thus the following description will explain the stay 110 and lock mechanism 120 on the right side of the seat, and omit the explanation of the stay 110 and lock mechanism 120 on the left side of the seat.

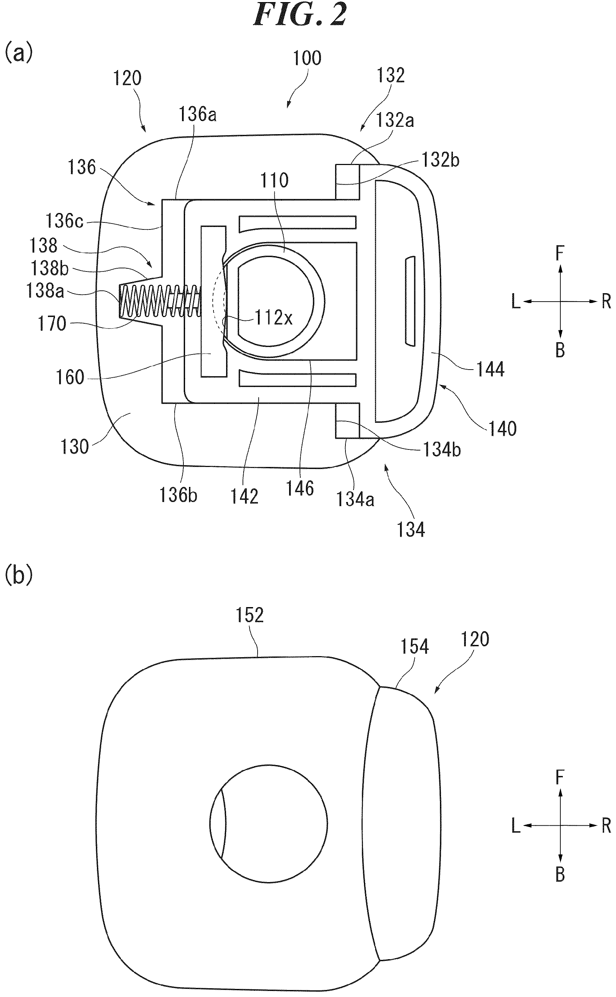

FIG. 2(a) is a cross-sectional view showing a state where the stay 110 is inserted into the lock mechanism 120 included in the vehicle headrest support structure 100 of FIG. 1. The lock mechanism 120 includes a holder 130, an operation member 140 provided on the holder 130, a plate-shaped lock plate 160 that is provided on the operation member 140 and engages with a groove 112 of the stay 110, and a spring 170 serving as a lock member (engaging member) that locks (engages) the lock plate 160 in (with) the groove 112 of the stay 110.

A spring that is made of an elastic material, metal, or the like and biases the lock plate 160 is used as a lock member to lock the lock plate 160 in the groove 112. A magnet (permanent magnet or electromagnet) may also or alternatively be provided as a biasing member for each of the lock plate 160 and the holder 130 to bias the lock plate 160 to the groove 112 using a magnetic repulsive force. Also, instead of using biasing members, the lock plate 160 may be engaged with the groove 112 manually using screws and bolts, etc., or using a mechanical motor, etc., or they may be engaged with each other mechanically.

The holder 130 is recessed toward the left side in the vehicle width direction and is formed in a U-shape when viewed in a plan view. The holder 130 has, from the right side in the vehicle width direction in order, two stepped portions 132 and 134, a first recess 136 formed on the inner side of these two stepped portions 132 and 134 and having a wide width, and a second recess 138 formed on the bottom side of the first recess 136 and having a width narrower than that of the first recess 136. The stepped portion 132 has a guide surface 132a and a rear-side surface 132b. The stepped portion 134 has a guide surface 134a and a rear-side surface 134b. The first recess 136 has guide surfaces 136a and 136b, and a rear-side surface 136c. The second recess 138 has a bottom surface 138a and a side surface 138b.

The operation member 140 includes an operation body 142 inserted into the first recess 136, and a pressing portion 144 inserted into the stepped portions 132 and 134. The operation body 142 has a hole 146 into which the stay 110 is inserted. The operation member 140 moves to the bottom side as the pressing portion 144 is pressed to the bottom side (toward the left side in the vehicle width direction), and stops when the pressing portion 144 comes against the stepped portions 132 and 134.

FIG. 2(b) is a plan view of the lock mechanism 120 included in the vehicle headrest support structure 100 of FIG. 1. As shown in FIG. 2(b), the lock mechanism 120 includes a holder cover 152 and a pressing cover 154 separate from the holder cover 152. The holder 130 and the operation body 142 of the operation member 140 are covered by the holder cover 152, and the pressing portion 144 of the operation member 140 is covered by the pressing cover 154. When the pressing cover 154 is pressed toward the holder cover 152, the operation member 140 is pushed into the holder 130.

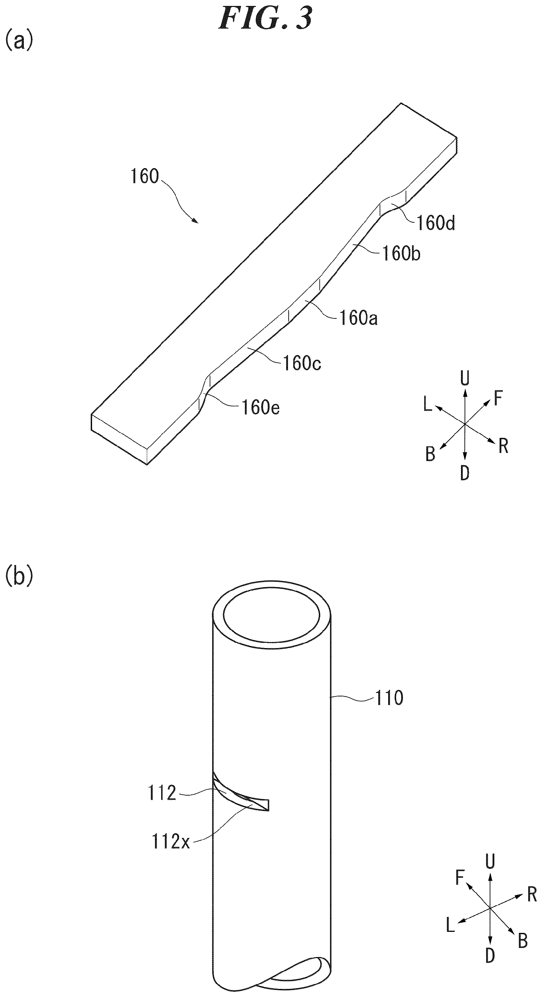

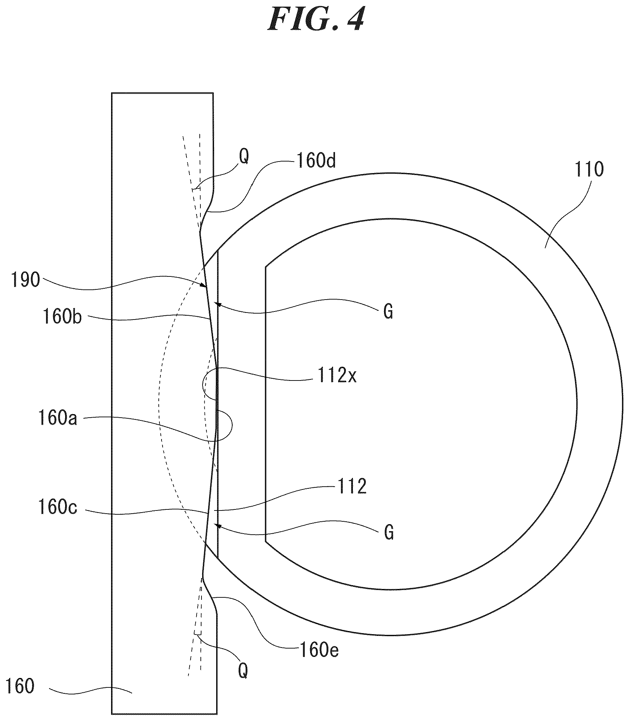

FIG. 3(a) is a perspective view of the lock plate 160 included in the vehicle headrest support structure 100 of FIG. 1. FIG. 4 is a plan view showing the configurations of the lock plate 160 and the stay 110 included in the vehicle headrest support structure 100 of FIG. 1. The lock plate 160 has a flat surface 160a located in the center in the width direction and formed on the most protruding portion toward the stay 110 when viewed in a plan view, and two inclined surfaces 160b and 160c. The inclined surfaces 160b and 160c serve as contact surfaces (or facing portions) that are gently inclined, are located on both sides of the flat surface 160a when viewed in a plan view, and face the groove 112 of the stay 110.

Note that in the present example, the dimension of the abutting surface 112x of the groove 112 in the vehicle front-back direction is smaller than the sum of the dimensions of the flat surface 160a, the inclined surface 160b, and the inclined surface 160c in the vehicle front-back direction.

The flat surface 160a is a surface extending in the vehicle front-back direction and up-down direction.

The inclined surface 160b is a surface that is inclined toward the left side (unlocking direction) in the vehicle width direction when following it to the front side of the vehicle, and extends in the up-down direction. The inclined surface 160c is a surface that is inclined toward the left side (unlocking direction) in the vehicle width direction when following it to the rear side of the vehicle, and extends in the up-down direction. The inclination angle Q of the inclined surfaces 160b and 160c is set to at most 15° relative to the vehicle front-back direction when viewed in a plan view. In other words, the inclination angle Q of the inclined surfaces 160b and 160c is set to at most 15° with respect to an orthogonal direction that is orthogonal to the locking direction.

The flat surface 160a is adjacent to the inclined surfaces 160b and 160c and protrudes the most to the center of an abutting surface 112x on the bottom of the groove 112 of the stay 110. The flat surface 160a is in areal contact with the abutting surface 112x of the groove 112 during normal use (before being subjected to an external force, that is, before the stay 110 is rotated about its axis). In the present example, as a result of the flat surface 160a and the abutting surface 112x being in areal contact with each other, it is easy to maintain the lock plate 160 in contact with the groove 112 during normal use.

The inclined surfaces 160b and 160c are inclined away from the groove 112 in the unlocking direction when following them away from the flat surface 160a, so the inclined surfaces 160b and 160c are not in contact with the abutting surface 112x during normal use. That is, during normal use, there is a gap G between the abutting surface 112x and each of the inclined surfaces 160b and 160c.

Therefore, even if, upon application of external force, the stay 110 rotates about its axis and the abutting surface 112x of the stay 110 approaches the inclined surface 160b or 160c, displacement of the lock plate 160 in the unlocking direction can be suppressed until the abutting surface 112x comes into contact with the inclined surface 160b or the inclined surface 160c.

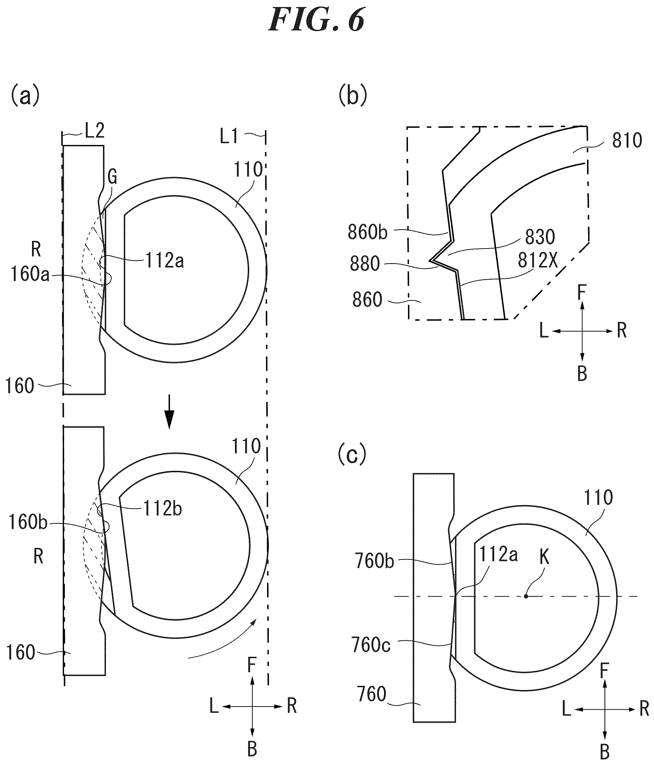

Furthermore, the dimension of the gap G is set such that the lock with the lock plate 160 is not released even when a predetermined external force is applied to the stay 110 and the abutting surface 112x comes into contact with the inclined surface 160b or the inclined surface 160c. In other words, the upper and lower surfaces of the groove 112 restrict the vertical displacement of the lock plate within a range R (the hatched area in FIG. 6(a)).

Furthermore, the inclined surfaces 160b and 160c come into areal contact with the abutting surface 112x on the bottom of the groove 112 when the stay 110 is rotated about its axis. In other words, the inclination degree and shape of the inclined surfaces 160b and 160c are set to the shape corresponding to the abutting surface 112x.

Also, the lock plate 160 may further include two outer surfaces 160d and 160e that are continuous with the two respective inclined surfaces 160b and 160c and extend toward the stay 110, when viewed in a plan view.

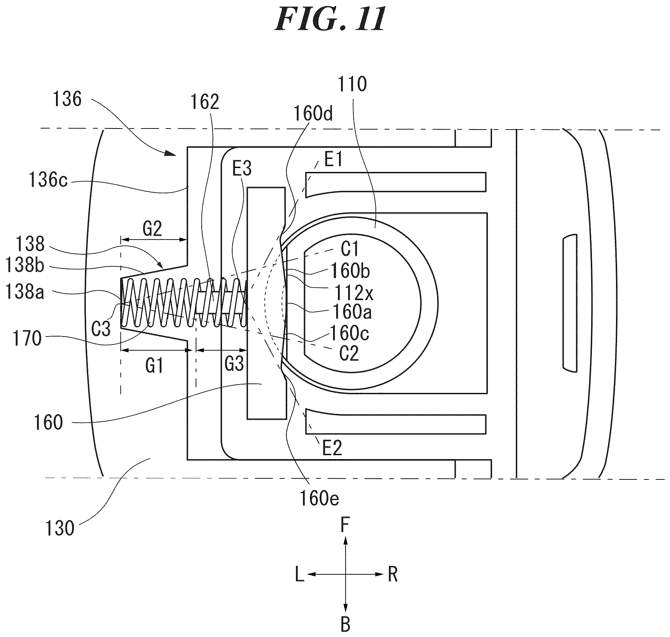

FIG. 11 is an enlarged view of a portion of FIG. 2. As shown in FIG. 11, a virtual line C1 is a line that passes through the midpoint of the inclined surface 160b and is orthogonal to the inclined surface 160b. A virtual line C2 is a line that passes through the midpoint of the inclined surface 160c and is orthogonal to the inclined surface 160c. In this case, an intersection C3 at which the virtual line C1 and the virtual line C2 intersect with each other is set to be located on the bottom surface 138a of the recess 138 to which the base end of the spring 170 is attached.

With this configuration, if the stay 110 rotates and the abutting surface 112x of the stay 110 comes into contact with the inclined surface 160b of the lock plate 160, the load applied by the abutting surface 112x to the inclined surface 160b will be applied to the bottom surface 138a along the virtual line C1, and the spring force of the spring 170 will efficiently act in the locking direction of the lock plate 160 as a reaction force. Also, if the stay 110 rotates and the abutting surface 112x of the stay 110 comes into contact with the inclined surface 160c of the lock plate 160, the load applied by the abutting surface 112x to the inclined surface 160c will be applied to the bottom surface 138a along the virtual line C2, and the spring force of the spring 170 will efficiently act in the locking direction of the lock plate 160 as a reaction force.

The intersection C3 between the virtual line C1 and the virtual line C2 may be set in a range G1 between the bottom surface 138a of the recess 138 and an insertion projection 162 of the lock plate 160. Alternatively, the intersection C3 between the virtual line C1 and the virtual line C2 may be set in a depth range G2 of the recess 138.

A virtual line E1 is a line extending along the outer surface 160d. A virtual line E2 is a line extending along the outer surface 160e. An intersection E3 is a point at which the virtual line E1 and the virtual line E2 intersect with each other. In this case, the intersection E3 is set to be located on the leading end side of the spring 170 relative to its intermediate position.

With this configuration, if the stay 110 moves in the vehicle front-back direction while rotating about its axis and comes into contact with the outer surface 160d or 160e of the lock plate 160, the lock plate 160 will be easily displaced following the displacement of the stay 110. The intersection E3 between the virtual line E1 and the virtual line E2 may be set in a length range G3 of the insertion projection 162 of the lock plate 160.

FIG. 3(b) is a perspective view of the stay 110 included in the vehicle headrest support structure 100 of FIG. 1. The recessed groove 112 extending in the horizontal direction is formed in a side surface of the stay 110. The abutting surface 112x of the groove 112 is flat. Note that, in the present example, the stay 110 is configured so that its longitudinal direction matches the up-down direction, but it does not need to be limited to this configuration. For example, a configuration is also possible in which the stay is bent into an inverted angular U-shape whose convex side points upward and the longitudinal direction of the stay matches the vertical direction. Also, in the present example, the stay 110 is formed in a cylindrical tube shape, but does not need to be limited to this configuration. For example, the stay may be formed in a solid shape. Also, in the present example, the cross-section of the stay 110 is circular, but may be a polygon such as a square.

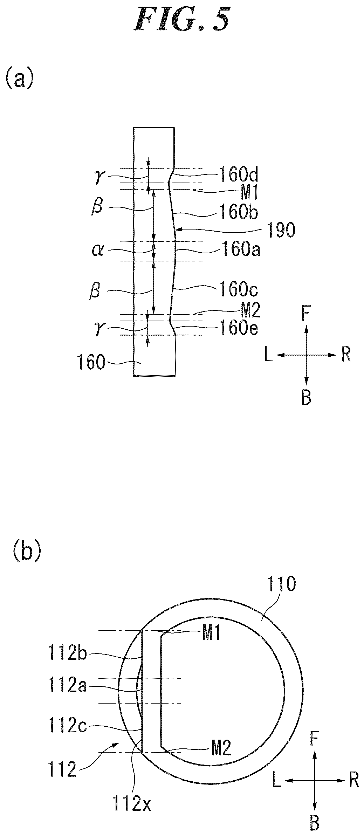

FIG. 5(a) is a plan view showing the lock plate 160 included in the vehicle headrest support structure 100 of FIG. 1. FIG. 5(b) is a cross-sectional view showing the configuration of the stay 110 included in the vehicle headrest support structure 100 of FIG. 1. The flat surface 160a of the lock plate 160 faces a central region 112a of the abutting surface 112x of the groove 112. The inclined surfaces 160b and 160c of the lock plate 160 face adjacent regions 112b and 112c of the abutting surface 112x of the groove 112. The outer surfaces 160d and 160e of the lock plate 160 do not face the abutting surface 112x of the groove 112.

In the lock plate 160, when the width of the flat surface 160a is defined as α, the width of the portions of the inclined surfaces 160b and 160c that can come into areal contact with the abutting surface 112x is defined as β, and the width of the outer surfaces 160d and 160e is defined as γ, then α ≤ β and γ ≤ α are satisfied. Preferably, γ < α < β is satisfied. In the present example, 2α < β and 2γ ≤ α are satisfied, and thus the outer surfaces 160d and 160e prevent the axial shifting of the stay 110, making it easy to increase the contact area when the stay 110 is twisted.

Note that α < β means that, in the orthogonal direction orthogonal to the locking direction in which the lock plate 160 moves toward the stay 110, the width or area of the portions of the inclined surfaces 160b and 160c that can be in areal contact is greater than that of the flat surface 160a, which is the most protruding portion.

Accordingly, the portion of the abutting surface 112x of the groove 112 of the stay 110 that comes into areal contact with the inclined surface 160b or 160c has a larger dimension or area in a plan view than the portion of the abutting surface 112x that comes into contact with the flat surface 160a.

Returning to FIG. 2(a), the following explanation is given. The base end of the spring 170 is fixed to the bottom surface 138a of the second recess 138, and the leading end of the spring 170 is fixed to the bottom of the lock plate 160. The spring 170 exerts force toward the right side in the vehicle width direction (locking direction). Thus, the spring 170 biases the lock plate 160 toward the stay 110. The central axis of the stay 110 is positioned in the direction in which the spring 170 exerts force. Furthermore, the direction orthogonal to the direction in which the spring 170 exerts force is orthogonal to the abutting surface 112x of the groove 112 of the stay 110.

The following will describe the function of the vehicle headrest support structure 100. FIG. 6(a) is a cross-sectional view showing the configurations of the lock plate 160 and the stay 110 before and after the stay 110 is rotated about its axis. Before the stay 110 is rotated about its axis, the flat surface 160a of the lock plate 160 is in contact with the central region 112a of the abutting surface 112x of the groove 112 of the stay 110, and the inclined surfaces 160b and 160c of the lock plate 160 are spaced apart from the abutting surface 112x in the unlocking direction by a gap G.

Here, when an external force f is applied to the headrest 194 as shown in FIG. 1(a), a rotative force J may be applied to the stay 110 of the headrest 194. Examples of such cases include cases where, as shown in FIG. 1(b), the external force f is transmitted from one side to the other side in the width direction of the headrest 194. When the rotative force J is applied to the stay 110, there is a risk that the stay 110 may rotate about its axis. When the stay 110 is rotated about its axis, the inclined surface 160b of the lock plate 160 may be into areal contact with the adjacent region 112b of the abutting surface 112x of the groove 112 of the stay 110.

With the above-described configuration, when the groove 212 is locked by the lock plate 160 and the stay 110 is not subjected to an external force that is sufficient to cause axial rotation, the gap G is provided between the lock plate 160 and at least one side of the abutting surface 112x. Thus, even if the external force f is applied to the headrest 194 and the stay 110 is rotated about its axis so that at least one side of the abutting surface 112x approaches the lock plate 160, it is possible to prevent the lock plate 160 and the abutting surface 112x from coming into contact with each other or to delay the timing of contact, by the gap G. As a result, even if the external force f is applied to the headrest 194, the lock plate 160 can be prevented from moving in the direction of unlocking the lock with the groove 112.

Furthermore, even if the lock plate 160 is in contact with the abutting surface 112x of the groove 112 of the stay 110, the lock plate 160 and the groove 112 of the stay 110 are in areal contact with each other, so the contact area between the lock plate 160 and the stay 110 can increase compared to the case where they are only in line contact. In other words, when they are in areal contact, the pressure transmitted from the stay 110 to the lock plate 160 decreases compared to when they are only in line contact, so the lock plate 160 is prevented from moving in the unlocking direction when the lock plate 160 and the stay 110 come into contact with each other. Accordingly, it is possible to prevent the stay 110 from rotating about its axis and being unlocked.

Since the abutting surface 112x of the groove 112 is flat and the lock plate 160 has the most protruding portion toward the center of the abutting surface 112x of the groove 112, the abutting surface 112x of the groove 112 of the stay 110 can make a broad contact with a side of the most protruding portion of the lock plate 160 when the stay 110 is rotated about its axis.

Also, as shown in FIG. 4, the two inclined surfaces 160b and 160c that are gently inclined are provided as the portions located on both sides of the flat surface 160a of the lock plate 160 and corresponding to the abutting surface 112x of the groove 112.

The inclination degree of the inclined surface 160b, 160c is set to an inclination angle Q (e.g., 15° at most) within the range where the lock is not released even when the lock plate 160 moves in the unlocking direction when the inclined surface 160b, 160c comes into contact with the abutting surface 112x due to the axial rotation of the stay 110.

The inclination angle Q may be set within the range of 0° < Q < 30° relative to the stay 110, based on the force (applied force or reaction force) acting on the inclined surfaces 160b and 160c and the flat surface 160a of the lock plate 160. Preferably, the inclination angle Q is set within the range of 5° ≤ Q ≤ 15°.

With this configuration, before the stay 110 rotates about its axis, the lock plate 160 is in areal contact with the abutting surface 112x of the groove 112 of the stay 110 with the flat surface 160a to lock the stay 110, and when the stay 110 is rotating about its axis, the lock plate 160 comes into areal contact with the abutting surface 112x of the groove 112 of the stay 110 with the inclined surface 160b or 160c, and can be prevented from moving in the unlocking direction.

Note that in the present example, the inclined surfaces 160b and 160c are provided on the respective sides of the flat surface 160a of the lock plate 160, but the configuration is not limited to this, and it is also possible that only one of the inclined surfaces 160b and 160c is provided adjacent to the flat surface 160a of the lock plate 160.

The lock plate 160 further includes the two outer surfaces 160d and 160e that are continuous with the two respective inclined surfaces 160b and 160c and extend toward the stay 110, when viewed in a plan view. Therefore, if the stay 110 is rotated about its axis, the stay 110 will come into contact with the outer surface 160d or 160e, thereby preventing the axial shifting of the stay 110 and preventing stress from being locally concentrated on the lock plate 160.

### Comparative Example

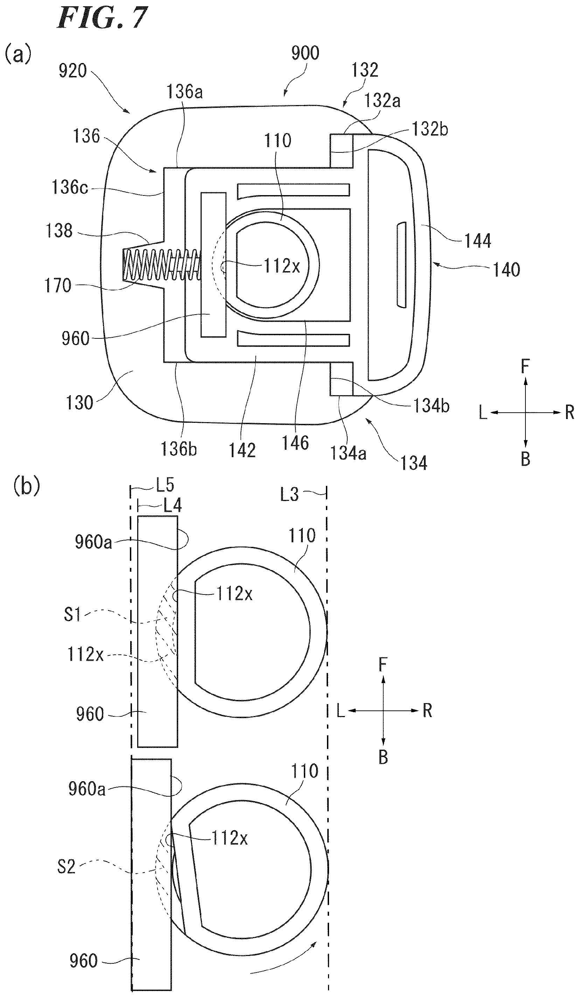

FIG. 7(a) is a plan view showing the configuration of the lock mechanism 120 included in a headrest support structure 900 according to a comparative example. FIG. 7(b) is a plan view showing the contact state between a lock plate 960 and the stay 110 before the stay 110 is rotated about its axis, as well as the contact state between the lock plate 960 and the stay 110 when the stay 110 was rotated about its axis.

In the comparative example, as shown in FIG. 7(b), before the stay 110 is rotated about its axis, the surface of the lock plate 960 that faces the groove 112 forms a single flat surface 960a, and the flat surface 960a is in contact with the entire abutting surface 112x of the groove 112 of the stay 110. That is, the portion of the flat surface 960a other than the center thereof is also in contact with the abutting surface 112x, and there is no gap between the flat surface 960a and the abutting surface 112x. Accordingly, when the stay 110 is rotated about its axis as shown in FIG. 7(b), there is a risk that the lock plate 960 may be pressed against the front end of the abutting surface 112x of the groove 112 of the stay 110 and may move in the unlocking direction in response to the twisting of the stay 110.

That is, when the right end of the stay 110 is at a position L3, the left end of the lock plate 960 is located at a position L4 before the axis rotation of the stay 110, and may move to a position L5 after the axis rotation of the stay 110.

Furthermore, since the flat surface 960a of the lock plate 960 and the front end of the abutting surface 112x of the groove 112 of the stay 110 are in line contact with each other, the force that twists the stay 110 among the external forces is concentrated locally at the portion of the lock plate 960 that is in line contact with the stay 110 and a pressure is applied. With this, the lock plate 960 is easily retracted in the unlocking direction, and the lock of the stay 110 may be released.

### Modification 1

FIG. 6(b) is a cross-sectional view showing the configurations of a lock plate 860 and a stay 810 according to Modification 1. In Modification 1, the lock plate 860 is used instead of the lock plate 160, and the stay 810 is used instead of the stay 110. As shown in FIG. 6(b), an inclined surface 860b of the lock plate has a recess 880. In addition, an abutting surface 812x of the stay 810 has a protrusion 830. The recess 880 and the protrusion 830 are shaped in a manner such that they engage with each other. In contrast thereto, a configuration is also possible in which the inclined surface 860b of the lock plate 860 has a protrusion and the abutting surface 812x of the stay 810 has a recess.

### Modification 2

FIG. 6(c) is a cross-sectional view showing the configurations of a lock plate 760 and the stay 110 according to Modification 2. In Modification 2, the lock plate 760 is used instead of the lock plate 160. Although the flat surface 160a is flat in the present example, the present invention is not limited to this configuration and may employ a configuration in which no flat surface 160a is provided. For example, as shown in FIG. 6(c), the contact surfaces may be formed by inclined surfaces 760b and 760c. The lock plate 760 and the stay 110 are arranged so that a virtual center position K of the stay 110 is aligned with the boundary between the inclined surface 760b and the inclined surface 760c.

### Second Example

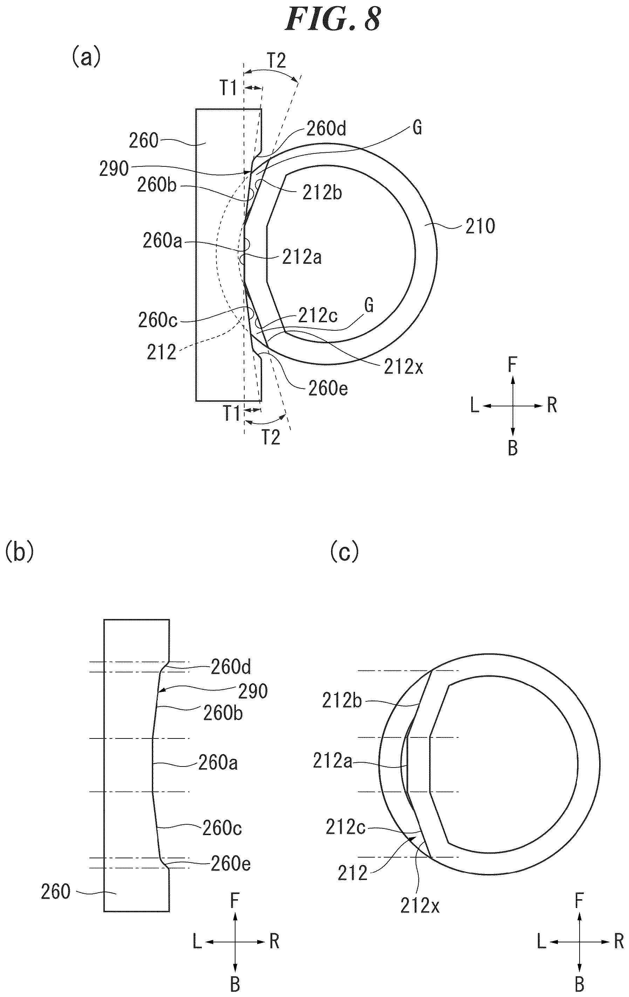

FIG. 8 shows plan views of a lock plate 260 and a stay 210 included in a headrest support structure according to a second example. The headrest support structure according to the second example is the same as the vehicle headrest support structure 100 according to the first example with respect to the configurations other than the lock plate 260 and the stay 210.

In the present example, the center of an abutting surface 212x of a groove 212 of the stay 210 protrudes the most toward the lock plate 260. The abutting surface 212x has a flat surface 212a extending in the vehicle front-back direction and the up-down direction, and inclined surfaces 212b and 212c that are inclined toward the right side in the vehicle width direction while moving away from the flat surface 212a in the vehicle front-back direction when viewed in a plan view.

The lock plate 260 has a flat surface 260a, which is a portion adjacent to inclined surfaces 260b and 260c and recessed the most from the center of the abutting surface 212x of the groove 212. The flat surface 260a extends in the vehicle front-back direction and up-down direction. The lock plate 260 also has the two inclined surfaces 260b and 260c that are gently inclined and located on both sides of the flat surface 260a, which is the most recessed portion when viewed in a plan view. The inclined surfaces 260b and 260c serve as contact surfaces (or facing portions).

The inclined surface 260b is inclined toward the right side in the vehicle width direction when following it to the front side of the vehicle from the flat surface 260a when viewed in a plan view. The inclined surface 260c is inclined toward the right side in the vehicle width direction when following it to the rear side of the vehicle from the flat surface 260a when viewed in a plan view. An angle T1 of the inclined surfaces 260b and 260c relative to the vehicle front-back direction when viewed in a plan view is set to at most 15°. The angle T1 of the inclined surfaces 260b and 260c of the lock plate 260 relative to the vehicle front-back direction when viewed in a plan view is set more gently than an angle T2 of the inclined surfaces 212b and 212c of the stay 210 relative to the vehicle front-back direction when viewed in a plan view. Therefore, before the stay 210 is rotated about its axis, there is a gap G between the inclined surface 260b and the inclined surface 212b, and there is also a gap G between the inclined surface 260c and the inclined surface 212c.

The lock plate 260 further includes two outer surfaces 260d and 260e that are continuous with the two respective inclined surfaces 260b and 260c and extend toward the stay 210, when viewed in a plan view.

The following will describe the function of the vehicle headrest support structure of the second example. As shown in FIG. 8(a), the flat surface 260a of the lock plate 260 is in contact with the flat surface 212a of the abutting surface 212x of the groove 212 of the stay 210, and the inclined surfaces 260b and 260c of the lock plate 260 are spaced apart from the abutting surface 212x in the unlocking direction by a gap G.

Here, when an external force f is applied to the headrest 194 as shown in FIG. 1(a), a rotative force J may be applied to the stay 210, instead of the stay 110 of the headrest 194, as shown in FIG. 1(b). When the stay 210 is rotated about its axis, the inclined surface 260b of the lock plate 260 is in areal contact with the inclined surface 212b of the abutting surface 212x of the groove 212 of the stay 210, or the inclined surface 260c is in areal contact with the inclined surface 212c of the abutting surface 212x of the groove 212 of the stay 210.

With the above-described configuration, when the groove 212 is locked by the lock plate 260 and the stay 210 is not subjected to an external force that is sufficient to cause axial rotation, the gap G is provided between at least one side of the abutting surface 212x and the lock plate 260. Thus, even if the external force f is applied to the headrest 194 and the stay 210 is rotated about its axis so that at least one side of the abutting surface 212x approaches the lock plate 260, it is possible to prevent the lock plate 260 and the abutting surface 212x from coming into contact with each other or to delay the timing of contact, by the gap G. As a result, even if the external force f is applied to the headrest 194, the lock plate 260 can be prevented from moving in the direction of unlocking the lock with the groove 212.

Furthermore, even if the lock plate 260 is in contact with the abutting surface 212x of the groove 212 of the stay 210, the lock plate 260 and the groove 212 of the stay 210 are in areal contact with each other, so the contact area between the lock plate 260 and the stay 210 can increase compared to the case where they are only in line contact. In other words, when they are in areal contact, the pressure transmitted from the stay 210 to the lock plate 260 decreases compared to when they are only in line contact, so the lock plate 260 is prevented from moving in the unlocking direction when the lock plate 260 and the stay 210 come into contact with each other. Accordingly, it is possible to prevent the stay 210 from rotating about its axis and being unlocked.

In addition, the center of the abutting surface 212x of the groove 212 protrudes the most toward the lock plate 260, and the lock plate 260 has the most recessed portion from the center of the abutting surface 212x of the groove 212, which is the most protruding portion. Therefore, the abutting surface 212x of the groove 212 of the stay 210 is difficult to be removed from the most recessed portion of the lock plate 260.

The most recessed portion of the lock plate 260 is flat, and the lock plate 260 has the two inclined surfaces 260b and 260c that are gently inclined and located on both sides of the most recessed portion when viewed in a plan view. Accordingly, before the stay 210 rotates about its axis, the lock plate 260 is in areal contact with the abutting surface 212x of the groove 212 of the stay 210 with the flat surface 260a to lock the stay 210, and when the stay 210 is rotating about its axis, the lock plate 260 comes into areal contact with the abutting surface 212x of the groove 212 of the stay 210 with the inclined surfaces 210b and 210c, and can be prevented from moving in the unlocking direction.

The lock plate 260 further includes the two outer surfaces 260d and 260e that are continuous with the two respective inclined surfaces 260b and 260c and extend toward the stay 210, when viewed in a plan view. Therefore, if the stay 210 is rotated about its axis, the stay 210 will come into contact with the outer surface 260d or 260e, which prevents axial shifting of the stay 210 and prevents stress from being locally concentrated on the lock plate 260.

### Third Example

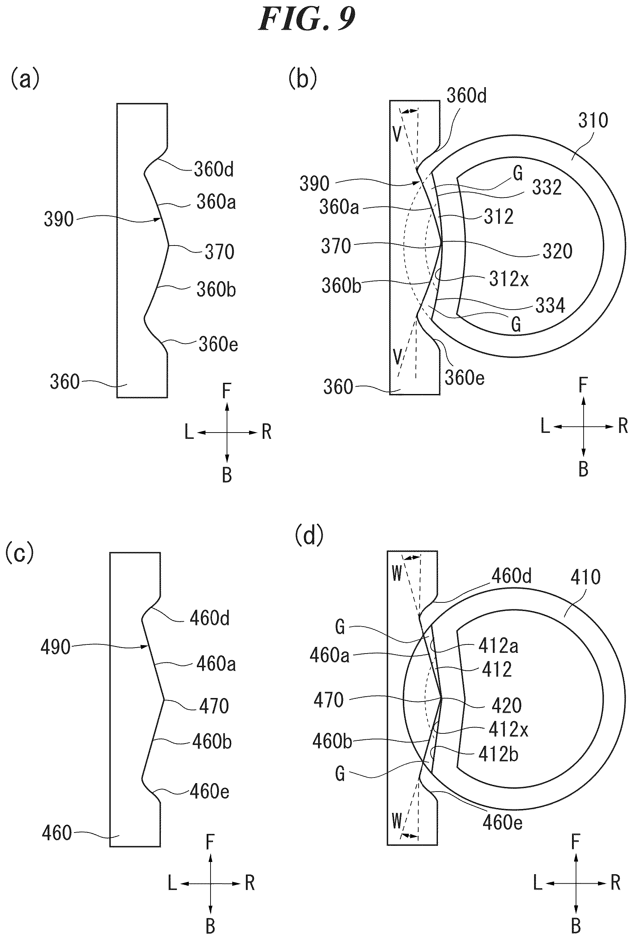

FIG. 9(a) is a plan view showing a lock plate 360 included in a headrest support structure according to a third example. FIG. 9(b) is a plan view showing the lock plate 360 and a stay 310 included in the headrest support structure according to the third example. The headrest support structure according to the third example is the same as the vehicle headrest support structure 100 according to the first example with respect to the configurations other than the lock plate 360 and the stay 310.

A groove 312 recessed in the horizontal direction is formed in a side surface of the stay 310, the groove 312 being recessed the most at the center of the groove. The lock mechanism includes the plate-shaped lock plate 360 that engages with the groove 312, and the spring 170 (see FIG. 2(a)) that serves as a lock member to bias (engage) the lock plate 360 toward (with) the groove 312.

An abutting surface 312x of the groove 312 of the stay 310 is recessed in a manner such that it is curved when viewed in a plan view. The abutting surface 312x has a central portion 320 and curved surfaces 332 and 334 located on both sides of the central portion 320. The curved surfaces 332 and 334 are continuously curved when viewed in a plan view.

The curved surfaces 360a and 360b, which serve as the contact surfaces (or facing portions) of the lock plate 360, protrude in a curved manner when viewed in a plan view. The curved surfaces 360a and 360b have different curving directions when viewed in a plan view, with a central portion 370 serving as their boundary.

The curved surfaces 360a and 360b of the lock plate 360 are curved away from the groove 312 in the unlocking direction when following them away from the central portion 370, which protrudes the most in a convex shape when viewed in the plan view. Therefore, during normal use, only the central portion 370 is in contact with the central portion 320 of the abutting surface 312x, whereas the other curved surfaces 360a and 360b are not in contact with the curved surfaces 332 and 334 of the abutting surface 312x. In other words, during normal use, there is a gap G between the curved surface 360a of the lock plate 360 and the curved surface 332 of the abutting surface 312x, and there is a gap G between the curved surface 360b of the lock plate 360 and the curved surface 334 of the abutting surface 312x.

Therefore, even if, upon application of external force, the stay 310 rotates about its axis and the abutting surface 312x of the stay 310 approaches the curved surface 360a or 360b, displacement of the lock plate 360 in the unlocking direction can be suppressed until the abutting surface 312x comes into contact with the corresponding curved surface 360a or 360b.

When viewed in a plan view, the shape of the curved surface 360a matches the shape of the curved surface 332 of the abutting surface 312x on the bottom of the groove 312. Therefore, in FIG. 9(b), when the stay 310 rotates counterclockwise about its axis, the curved surface 360a and the curved surface 332 come into areal contact.

Similarly, when viewed in a plan view, the shape of the curved surface 360b matches the shape of the curved surface 334 of the abutting surface 312x on the bottom of the groove 312. Therefore, in FIG. 9(b), when the stay 310 rotates clockwise about its axis, the curved surface 360b and the curved surface 334 come into areal contact.

An angle V of the curved surfaces 360a and 360b, which are curved when viewed in a plan view, of the lock plate 360 with respect to the orthogonal direction (vehicle front-back direction) is set to 15° at most.

The lock plate 360 further includes two outer surfaces 360d and 360e that are continuous with the position where they come into areal contact with the abutting surface 312x on the bottom of the groove 312 and extend toward the stay 310, when viewed in a plan view.

With the above-described configuration, when the groove 312 is locked by the lock plate 360 and the stay 310 is not subjected to an external force that is sufficient to cause axial rotation, a gap G is provided between the lock plate 360 and at least one side of the abutting surface 312x. Thus, even if the external force f is applied to the headrest 194 and the stay 310 is rotated about its axis so that at least one side of the abutting surface 312x approaches the lock plate 360, it is possible to prevent the lock plate 360 and the abutting surface 312x from coming into contact with each other or to delay the timing of contact, by the gap G. As a result, even if the external force f is applied to the headrest 194, the lock plate 360 can be prevented from moving in the direction of unlocking the lock with the groove 312.

Furthermore, even if the lock plate 360 is in contact with the abutting surface 312x of the groove 312 of the stay 310, the lock plate 360 and the groove 312 of the stay 310 are in areal contact with each other, so the contact area between the lock plate 360 and the stay 310 can increase compared to the case where they are only in line contact. In other words, when they are in areal contact, the pressure transmitted from the stay 310 to the lock plate 360 decreases compared to when they are only in line contact, so the lock plate 360 is prevented from moving in the unlocking direction when the lock plate 360 and the stay 310 come into contact with each other. Accordingly, it is possible to prevent the stay 310 from rotating about its axis and being unlocked.

Since the abutting surface 312x of the groove 312 is recessed in a manner such that it is curved when viewed in a plan view, the areal contact portion on the lock plate 360 side is also curved. Therefore, the lock plate 360 can smoothly come into contact with the groove 312 on the stay 310 side.

The lock plate 360 further includes the two outer surfaces 360d and 360e that are continuous with the position where they come into areal contact with the abutting surface 312x on the bottom of the groove 312 and extend toward the stay 310, when viewed in a plan view. Therefore, if the stay 310 is rotated about its axis, the stay 310 will come into contact with the outer surface 360d or 360e, which prevents axial shifting of the stay 310 and prevents stress from being locally concentrated on the lock plate 360.

### Fourth Example

FIG. 9(c) is a plan view showing a lock plate 460 included in a headrest support structure according to a fourth example. FIG. 9(d) is a plan view showing the lock plate 460 and a stay 410 included in the headrest support structure according to the fourth example. The headrest support structure according to the fourth example is the same as the vehicle headrest support structure 100 according to the first example with respect to the configurations other than the lock plate 460 and the stay 410.

A groove 412 recessed in the horizontal direction is formed in a side surface of the stay 410, the groove 412 being recessed the most at the center of the groove. The lock mechanism includes the plate-shaped lock plate 460 that engages with the groove 412, and the spring 170 (see FIG. 2(a)) that serves as a lock member to bias (engage) the lock plate 460 toward (with) the groove 412.

An abutting surface 412x of the groove 412 of the stay 410 is gently recessed in a V-shape when viewed in a plan view. The abutting surface 412x has a central portion 420 and inclined surfaces 412a and 412b located on both sides of the central portion 420.

Inclined surfaces 460a and 460b, which serve as the contact surfaces (or facing portions) of the lock plate 460, protrude in a V-shape when viewed in a plan view. The inclined surfaces 460a and 460b have different inclination direction when viewed in a plan view, with a central portion 470 serving as the boundary thereof.

The inclined surfaces 460a and 460b of the lock plate 460 are inclined away from the groove 412 in the unlocking direction while moving away from the central portion 470, which protrudes the most in a convex shape when viewed in the plan view. Therefore, during normal use, only the central portion 470 is in contact with the central portion 420 of the abutting surface 412x, whereas the other inclined surfaces 460a and 460b are not in contact with the inclined surfaces 412a and 412b of the abutting surface 412x. In other words, during normal use, there is a gap G between the inclined surface 460a and the inclined surface 412a of the abutting surface 412x, and there is a gap G between the inclined surface 460b and the inclined surface 412b.

Therefore, even if, upon application of external force, the stay 410 rotates about its axis and the abutting surface 412x of the stay 410 approaches the inclined surface 460a or 460b, displacement of the lock plate 460 in the unlocking direction can be suppressed until the abutting surface 412x comes into contact with the corresponding inclined surface 460a or 460b.

When viewed in a plan view, the shape of the inclined surface 460a matches the shape of the inclined surface 412a of the abutting surface 412x on the bottom of the groove 412. Therefore, in FIG. 9(d), when the stay 410 rotates counterclockwise about its axis, the inclined surface 460a and the inclined surface 412a come into areal contact.

Similarly, when viewed in a plan view, the shape of the inclined surface 460b matches the shape of the inclined surface 412b of the abutting surface 312x on the bottom of the groove 312. Therefore, in FIG. 9(d), when the stay 410 rotates clockwise about its axis, the inclined surface 460b and the inclined surface 412b come into areal contact.

An inclination angle W of the inclined surfaces 412a and 412b with respect to the orthogonal direction (vehicle front-back direction) is set to 15° at most.

The lock plate 460 further includes two outer surfaces 460d and 460e that are continuous with the position where they come into areal contact with the abutting surface 412x on the bottom of the groove 412 and extend toward the stay 410, when viewed in a plan view.

With the above-described configuration, when the groove 412 is locked by the lock plate 460 and the stay 410 is not subjected to an external force that is sufficient to cause axial rotation, a gap G is provided between the lock plate 460 and at least one side of the abutting surface 412x. Thus, even if the external force f is applied to the headrest 194 and the stay 410 is rotated about its axis so that at least one side of the abutting surface 412x approaches the lock plate 460, it is possible to prevent the lock plate 460 and the abutting surface 412x from coming into contact with each other or to delay the timing of contact, by the gap G. As a result, even if the external force f is applied to the headrest 194, the lock plate 460 can be prevented from moving in the direction of unlocking the lock with the groove 412.

Furthermore, even if the lock plate 460 is in contact with the abutting surface 412x of the groove 412 of the stay 410, the lock plate 460 and the groove 412 of the stay 410 are in areal contact with each other, so the contact area between the lock plate 460 and the stay 410 can increase compared to the case where they are only in line contact. In other words, when they are in areal contact, the pressure transmitted from the stay 410 to the lock plate 460 decreases compared to when they are only in line contact, so the lock plate 460 is prevented from moving in the unlocking direction when the lock plate 460 and the stay 410 come into contact with each other. Accordingly, it is possible to prevent the stay 410 from rotating about its axis and being unlocked.

Since the abutting surface 412x of the groove 412 is gently inclined and recessed substantially in a V-shape when viewed in a plan view, the tip of the areal contact portion on the lock plate 460 side easily fits into the V-shaped abutting surface 412x on the stay 410 side of the groove 412, thereby increasing the reliability of the areal contact.

The lock plate 460 further includes the two outer surfaces 460d and 460e that are continuous with the position where they come into areal contact with the abutting surface 412x on the bottom of the groove 412 and extend toward the stay 410, when viewed in a plan view. Therefore, if the stay 410 is rotated about its axis, the stay 410 will come into contact with the outer surface 460d or 460e, which prevents axial shifting of the stay 410 and prevents stress from being locally concentrated on the lock plate 460.

### Fifth Example

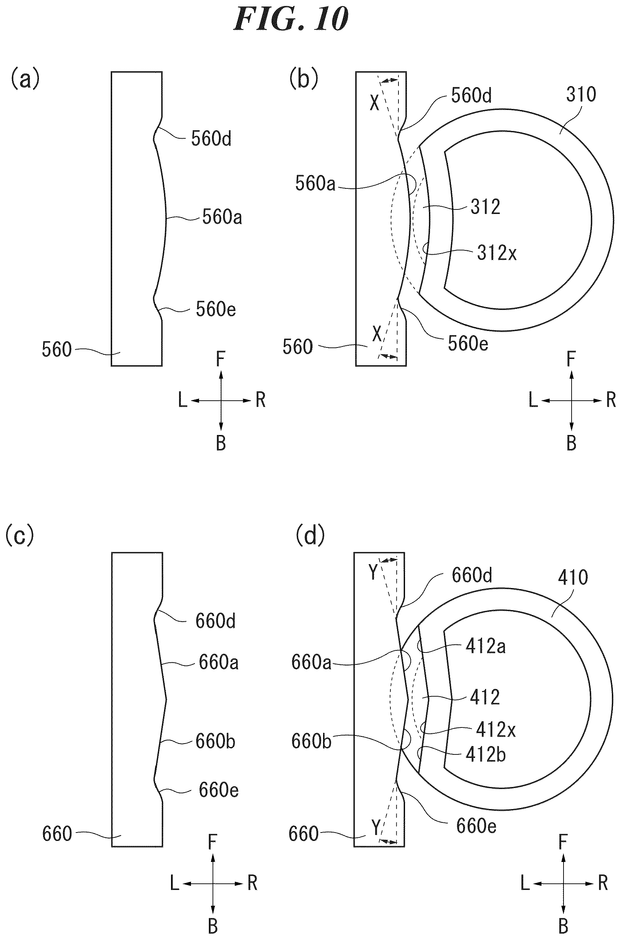

FIG. 10(a) is a plan view showing a lock plate 560 included in a headrest support structure according to a fifth example. FIG. 10(b) is a plan view showing the lock plate 560 and the stay 310 included in the headrest support structure according to the fifth example. The headrest support structure according to the fifth example is the same as the vehicle headrest support structure 100 according to the first example with respect to the configurations other than the lock plate 560 and the stay 310. Note that, for convenience of explanation, FIG. 10(b) shows the state where the lock plate 560 and the stay 310 are not in contact with each other, but in reality, they are in contact with each other.

The groove 312 recessed in the horizontal direction is formed in a side surface of the stay 310, the groove 312 being recessed the most at the center of the groove. The lock mechanism includes the plate-shaped lock plate 560 that engages with the groove 312, and the spring 170 (see FIG. 2(a)) that biases (engages) the lock plate 560 toward (with) the groove 312. The lock plate 560 has a curved surface 560a, which serves as a contact surface where the lock plate 560 comes into areal contact with the entire abutting surface 312x on the bottom of the groove 312. An angle X of the curved surface 560a, which is curved when viewed in a plan view, of the lock plate 560 with respect to the orthogonal direction (vehicle front-back direction) is set to 15° at most.

The abutting surface 312x of the groove 312 of the stay 310 is recessed in a manner such that it is curved when viewed in a plan view. The lock plate 560 further includes two outer surfaces 560d and 560e that are continuous with the portion where the lock plate 560 comes into areal contact with the entire abutting surface 312x on the bottom of the groove 312 and extend toward the stay 310, when viewed in a plan view.

According to this configuration, even before the stay 510 is rotated about its axis by the external force f applied to the headrest 194, the lock plate 560 is prevented from coming into areal contact with the abutting surface 312x of the groove 312 in the stay 310 and moving in the unlocking direction. Accordingly, it is possible to prevent the stay 310 from rotating about its axis and being unlocked.

Since the abutting surface 312x of the groove 312 is recessed in a manner such that it is curved when viewed in a plan view, the areal contact portion on the lock plate 560 side is also curved, and the lock plate 560 can smoothly come into contact with the groove 312 on the stay 310 side.

The lock plate 560 further includes the two outer surfaces 560d and 560e that are continuous with the portion where the lock plate 560 comes into areal contact with the entire abutting surface 312x on the bottom of the groove 312 and extend toward the stay 310, when viewed in a plan view. Therefore, if the stay 310 is rotated about its axis, the stay 310 will come into contact with the outer surface 560d or 560e, which prevents axial shifting of the stay 310 and prevents stress from being locally concentrated on the lock plate 560.

### Sixth Example

FIG. 10(c) is a plan view showing a lock plate 660 included in a headrest support structure according to a sixth example. FIG. 10(d) is a plan view showing the lock plate 660 and the stay 410 included in the headrest support structure according to the sixth example. The headrest support structure according to the sixth example is the same as the vehicle headrest support structure 100 according to the first example with respect to the configurations other than the lock plate 660 and the stay 410. Note that, for convenience of explanation, FIG. 10(d) shows the state where the lock plate 660 and the stay 440 are not in contact with each other, but in reality, they are in contact with each other.

The groove 412 recessed in the horizontal direction is formed in a side surface of the stay 410, the groove 412 being recessed the most at the center of the groove. The lock mechanism includes the plate-shaped lock plate 660 that engages with the groove 412, and the spring 170 (see FIG. 2(a)) that serves as a lock member to bias (engage) the lock plate 660 toward (with) the groove 412. The lock plate 660 includes inclined surfaces 660a and 660b serving as contact surfaces that come into areal contact with the entire abutting surface 412x on the bottom of the groove 412. An inclination angle Y of the inclined surfaces 660a and 660b with respect to the orthogonal direction (vehicle front-back direction) is set to 15° at most.

The abutting surface 412x of the groove 412 is gently inclined and recessed substantially in a V-shape when viewed in a plan view. The abutting surface 412x has the inclined surfaces 412a and 412b.

The lock plate 660 further includes two outer surfaces 660d and 660e that are continuous with the portion where the lock plate 660 comes into areal contact with the entire abutting surface 412x on the bottom of the groove 412 and extend toward the stay 410, when viewed in a plan view.

According to this configuration, even before the stay 410 is rotated about its axis by the external force f applied to the headrest 194, the lock plate 660 is prevented from coming into areal contact with the abutting surface 412x of the groove 412 of the stay 410 and moving in the unlocking direction. Accordingly, it is possible to prevent the stay 410 from rotating about its axis and being unlocked.

Since the abutting surface 412x of the groove 412 is gently inclined and recessed substantially in a V-shape when viewed in a plan view, the tip of the areal contact portion on the lock plate 660 side easily fits into the V-shaped abutting surface 412x of the groove 412 on the stay 410 side, thereby increasing the reliability of the areal contact.

The lock plate 660 further includes the two outer surfaces 660d and 660e that are continuous with the portion where the lock plate 660 comes into areal contact with the entire abutting surface 412x on the bottom of the groove 412 and extend toward the stay 410, when viewed in a plan view. Therefore, if the stay 410 is rotated about its axis, the stay 410 will come into contact with the outer surface 660c or 660d, which prevents axial shifting of the stay 410 and prevents stress from being locally concentrated on the lock plate 660.

Note that the above-described first to fourth examples have described configurations in which the lock plate and the stay come into areal contact due to the axial rotation of the stay, but a configuration is also possible in which they do not necessarily come into areal contact as long as there is the gap G. This is because, if there is the gap G, it is possible to prevent the stay from rotating about its axis and being unlocked.

The above-described first to sixth examples have described a vehicle headrest support structure, but the present invention is not limited to the above examples. For example, this structure may also be applied to passenger vehicle headrest support structures for passenger vehicles such as airplanes, ships, and the like.

The preferred embodiments of the present invention have been described with reference to the accompanying drawings, but the present invention is of course not limited to these examples. It is clear that a person skilled in the art can arrive at various changes or modifications within the scope of the claims, which are naturally understood to be within the technical scope of the present invention.

The present invention can also be implemented by freely combining inventions described in the claims and examples with each other, regardless of the dependent relationship of the claims.

### [Industrial Applicability]

The present invention is applicable to a passenger vehicle headrest support structure and a lock plate.

### [Index to the Reference Numerals]

100 ... Vehicle headrest support structure (passenger vehicle headrest support structure); 110 ... Stay; 112 ... Groove; 112a ... Central region; 112b, 112c ... Adjacent region; 112x ... Abutting surface; 120 ... Lock mechanism; 130 ... Holder; 132, 134 ... Stepped portion; 132a, 134a ... Guide surface; 132b, 134b ... Rear-side surface; 136 ... Recess; 136a, 136b ... Guide surface; 136c ... Rear-side surface; 138 ... Recess; 140 ... Operation member; 142 ... Operation member body; 144 ... Pressing portion; 146 ... Hole; 152 ... Holder cover; 154 ... Pressing cover; 160 ... Lock plate; 160a ... Flat surface; 160b, 160c ... Inclined surface; 160d, 160e ... Outer surface; 192 ... Seat back; 194 ... Headrest; 210 ... Stay; 212 ... Groove; 212A ... Flat surface; 212b, 212c ... Inclined surface; 212X ... Abutting surface; 260... Lock plate; 260a ... Flat surface; 260b, 260c ... Inclined surface; 260d, 260e ... Outer surface; 310 ... Stay; 312 ... Groove; 312x ... Abutting surface; 332, 334 ... Curved surface; 360 ... Lock plate; 360a, 360b... Curved surface; 360d, 360e ... Outer surface; 370 ... Central portion; 410 ... Stay; 412 ... Groove; 412a, 412b ... Inclined surface; 412x ... Abutting surface; 460 ... Lock plate; 460a, 460b ... Inclined surface; 460d, 460e ... Outer surface; 560 ... Lock plate; 560a ... Curved surface; 560d, 360e ... Outer surface; 660 ... Lock plate; 660a, 660b ... Inclined surface; 660d, 660e ... Outer surface; 900 ... Vehicle headrest support structure; 960 ... Lock plate; 960a ... Flat surface

## Claims

1. A passenger vehicle headrest support structure (100) comprising: a stay (110; 210) configured to support a headrest (194); and a lock mechanism (120) that is provided in a seat back (192) and configured to lock the stay (110; 210),
**characterized in that** a groove (112; 212) recessed in a horizontal direction is formed in a side surface of the stay (110; 210),
the lock mechanism (120) includes a plate-shaped lock plate (160; 260) configured to engage with the groove (112; 212), and a lock member (170) configured to bring the lock plate (160; 260) into engagement with the groove (112; 212), and
the lock plate (160; 260) has a contact surface (160b, 160c; 260b, 260c) that is in areal contact with an abutting surface (112x; 212x) on the bottom of the groove (112; 212) when the stay (110; 210) is rotated about its axis.

2. The passenger vehicle headrest support structure (100) according to claim 1,
**characterized in that** the contact surface (160b, 160c) of the lock plate (160) is arranged across a gap from the abutting surface (112x) on the bottom of the groove (112) before the stay (110) is rotated about its axis.

3. The passenger vehicle headrest support structure (100) according to claim 1 or 2,
**characterized in that** the abutting surface (112x) of the groove (112) is flat, and
the lock plate (160) has a most protruding portion (160a) that is adjacent to the contact surface (160b, 160c) and protrudes the most to the center of the abutting surface (112x) of the groove (112).

4. The passenger vehicle headrest support structure (100) according to claim 3,
**characterized in that** the most protruding portion (160a) of the lock plate (160) is flat, and
the contact surface (160b, 160c) of the lock plate (160) is an inclined surface that is gently inclined and located on at least one of the sides of the most protruding portion (160a) when viewed in a plan view.

5. The passenger vehicle headrest support structure (100) according to claim 4,
**characterized in that** a portion of the abutting surface (112x) of the groove (112) of the stay (110) that comes into areal contact with the inclined surface has a larger dimension or area when viewed in a plan view than a portion of the abutting surface (112x) that is in contact with the flat surface.

6. The passenger vehicle headrest support structure (100) according to claim 1,
**characterized in that** the center of the abutting surface (212x) of the groove (212) protrudes the most toward the lock plate (260), and
the lock plate (260) has a most recessed portion (260a) that is adjacent to the contact surface (260b, 260c) and recessed the most from the center of the abutting surface (212x) of the groove (212).

7. The passenger vehicle headrest support structure (100) according to claim 6,
**characterized in that** the most recessed portion (260a) of the lock plate (260) is flat, and the contact surface (260b, 260c) of the lock plate (260) is an inclined surface that is gently inclined and located on at least one of the sides of the most recessed portion (260a) when viewed in a plan view.

8. The passenger vehicle headrest support structure (100) according to claim 4,
**characterized in that** the lock plate (160) further includes at least one outer surface (160d, 160e) that is continuous with the inclined surface (160b, 160c) and extends toward the stay (110).

9. A passenger vehicle headrest support structure (100) comprising: a stay (310; 410) configured to support a headrest (194); and a lock mechanism (120) that is provided in a seat back (192) and configured to lock the stay (310; 410),
**characterized in that** a groove (312; 412) recessed in a horizontal direction is formed in a side surface of the stay (310; 410), the groove (312; 412) being recessed the most at the center of the groove (312; 412),
the lock mechanism (120) includes a plate-shaped lock plate (360; 460; 560; 660) configured to engage with the groove (312; 412), and a lock member (170) configured to bring the lock plate (360; 460; 560; 660) into engagement with the groove (312; 412), and
the lock plate (360; 460; 560; 660) has a contact surface (360a, 360b; 460a, 460b; 560a; 660a, 660b) that is in areal contact with an entire abutting surface (312x; 412x) on the bottom of the groove (312; 412).

10. The passenger vehicle headrest support structure (100) according to claim 9,
**characterized in that** the abutting surface (312x) of the groove (312) is recessed in a manner such that it is curved when viewed in a plan view.

11. The passenger vehicle headrest support structure (100) according to claim 9,
**characterized in that** the abutting surface (412x) of the groove (410) is gently inclined and recessed substantially in a V-shape when viewed in a plan view.

12. The passenger vehicle headrest support structure (100) according to claim 10 or 11,
**characterized in that** the lock plate (360; 460) further includes two outer surfaces (360d, 360e; 460d, 460e) that are continuous with the contact surface (360a, 360b; 460a, 460b), and extend toward the stay (310; 410).

13. A plate-shaped lock plate (160; 360; 460) configured to engage with a groove (112; 312; 412) recessed in a horizontal direction and formed in a side of a stay (110; 310; 410) for supporting a headrest (194) to lock the stay (110; 310; 410),
**characterized in that** the lock plate (160; 360; 460) has a most protruding portion (160a; 370; 470) that protrudes the most to the center of an abutting surface (112x; 312x; 412x) on the bottom of the groove (112; 312; 412).

14. A passenger vehicle headrest support structure (100) comprising: a stay (110) configured to support a headrest (194); and a lock mechanism (120) that is provided in a seat back (192) and configured to lock the stay (110),
**characterized in that** a groove (112) recessed in a horizontal direction is formed in a side surface of the stay (110),
an abutting surface (112x) on the bottom of the groove (112) is flat,
the lock mechanism (120) includes a plate-shaped lock plate (160) configured to engage with the groove (112), and a lock member (170) configured to bring the lock plate (160) into engagement with the groove (112), and
the lock plate (160) has a facing portion that faces the abutting surface (112x) of the groove (112),
the facing portion has a flat surface (160a) that protrudes the most to the center of the abutting surface (112x) of the groove (112), and an inclined surface (160b, 160c) that is gently inclined, is located on at least one of the sides of the most protruding flat surface (160a) when viewed in a plan view, and has a larger area than an area of the flat surface (160a), and
the inclined surface (160b, 160c) is arranged across a gap (G) from the abutting surface (112x) on the bottom of the groove (112) before the stay (110) is rotated about its axis.
